# FASCICULE DE BREVET EUROPEEN

(11) **EP 3 405 736 B1**
(45) Date de publication et mention de la délivrance du brevet: **13.04.2022**
(21) Numéro de dépôt: 17702023.7
(22) Date de dépôt: 19.01.2017
(51) Int. Cl.: F28F 9/02, F28D 1/053, F28D 20/02, F28F 1/00, F28D 20/00

(54) **ECHANGEUR THERMIQUE À FLUIDE CALOPORTEUR À ASSEMBLAGE OPTIMISÉ ET UN DISPOSITIF DE STOCKAGE D'ÉNERGIE THERMIQUE PAR MATÉRIAU À CHANGEMENT DE PHASE COMPRENANT LEDIT ÉCHANGEUR**
WÄRMETRANSFER-FLUIDWÄRMETAUSCHER MIT OPTIMIERTER ANORDNUNG UND WÄRMESPEICHERVORRICHTUNG MIT EINEM SPEICHERSTOFF UND MIT SOLCH EINEM TAUSCHER
HEAT-TRANSFER-FLUID HEAT EXCHANGER WITH OPTIMISED ASSEMBLY, AND THERMAL ENERGY STORAGE DEVICE USING A PHASE CHANGE MATERIAL AND COMPRISING SAID EXCHANGER

(30) Priorité: 20.01.2016 FR 1650444
(43) Date de publication de la demande: 28.11.2018
(73) Titulaire: Commissariat à l'Énergie Atomique et aux Énergies Alternatives, 75015 Paris (FR)
(72) Inventeur: GARCIA, Pierre, 38700 Corenc (FR); NIVELON, Pierre, 38660 Saint Hilare Du Touvet (FR)
(74) Mandataire: Brizio Delaporte, Allison
(86) Numéro de dépôt international: PCT/EP2017/051117
(87) Numéro de publication internationale: WO 2017/125513

(56) Documents cités:
- DE-A1- 4 006 965
- DE-A1-102014 010 636
- DE-B3-102006 026 531
- JP-A- 2001 207 163
- JP-A- 2005 337 664
- US-A- 5 944 089
- US-A1- 2011 226 780
- US-B1- 6 220 337

## Description

### DOMAINE TECHNIQUE

La présente invention concerne un dispositif de stockage d'énergie thermique par matériau à changement de phase suivant la revendication 1.

Le domaine de l'invention concerne les Systèmes de Stockage Thermiques (SST) par Matériaux à Changement de Phase (MCP).

L'invention concerne plus particulièrement l'intégration d'un système de stockage thermique dans des centrales solaires à concentration, par exemple pour des centrales à génération directe de vapeur, ou encore la valorisation de la chaleur fatale des industries.

### ETAT DE LA TECHNIQUE

Les systèmes de stockage thermique offrent de nombreux bénéfices pour la gestion des industries. Par exemple, dans les centrales solaires à concentration, il existe un écart temporel entre la ressource solaire disponible et la demande en énergie. Ce problème se pose pour toutes les unités de production de chaleur intermittente. Le développement de systèmes de stockage permet de différer l'utilisation de la production de chaleur en collectant la chaleur pendant les périodes de fortes irradiations solaires afin de la restituer plus tard durant les périodes de non-ensoleillement ou durant la nuit.

Dans l'industrie des procédés, les systèmes de stockage thermique sont un moyen de valoriser la chaleur fatale. Cette chaleur, issue des rejets thermiques industriels, est disponible à des niveaux de température entre 30 et 90 °C dans l'industrie agroalimentaire, papier-carton, chimie et même entre 200-500 °C pour les industries des métaux, verre et ciment. Cependant, dans la plupart des cas, les périodes de disponibilité diffèrent des périodes d'utilisation, et sans solution de stockage, toute l'énergie en excès, inutilisable au moment de sa production, est simplement jetée dans le milieu extérieur (à l'atmosphère sous forme d'effluents gazeux ou dans les circuits d'eau naturels sous forme d'effluents liquides). Avec un système de stockage, l'énergie produite en excès durant la journée pourrait être injectée sur un réseau urbain de chaleur au moment des pics de consommation, le matin et le soir. Le stockage de chaleur permettrait également de transporter cette énergie sur un autre site industriel qui aurait besoin d'un apport thermique.

Il existe différents types de stockage : sensible, latent et thermochimique.

Le stockage latent met en oeuvre des Matériaux à Changement de Phase (MCP) pour stocker la chaleur. Le stockage thermique est réalisé par stockage par enthalpie de changement d'état. C'est l'enthalpie de changement de phase, le plus souvent lors du changement d'état solide/liquide, qui est stockée. Cette énergie, qui est absorbée lors de la fusion et libérée lors de la solidification, résulte de l'établissement, ou de la rupture, de liaisons interatomiques ou intermoléculaires. La charge du système de stockage s'accompagne de la fusion du matériau de stockage, tandis que la décharge est réalisée par la solidification dudit matériau. Le matériau doit être judicieusement choisi en fonction de la température cible du système de stockage, afin que sa température de fusion soit dans la plage de température d'utilisation. Le changement de phase liquide-gazeux est bien plus intéressant énergétiquement parlant mais les difficultés de mise en oeuvre liées à la gestion de volumes importants de gaz sous pression et à haute température limitent leur développement.

La chaleur échangée est appelée enthalpie de changement de phase ou chaleur latente et la quantité d'énergie est de l'ordre de 200 J/g si bien qu'en utilisant de tels MCP solide-liquide, il est possible de réduire les volumes de stockage. De ce fait les quantités de matériaux sont réduites, ce qui diminue le prix du système, et limite les pertes thermiques qui sont proportionnelles à la surface extérieure du réservoir.

La densité énergétique peut ainsi être doublée par rapport aux systèmes sensibles. Elle est, en effet, de l'ordre de 15-60 kWh/m3 pour les systèmes de stockage sensible et de 60-120 kWh/m3 pour les systèmes de stockage latent. Un des avantages majeurs de cette technologie est que le changement de phase peut se faire à pression et température constantes. Par conséquent, la décharge de l'énergie stockée se fait à température constante.

Cependant, la faible conductivité thermique des MCP, de l'ordre de 0,2 à 0,5 W/(m.K) limite le transfert thermique au sein de ces matériaux. Les MCP sont alors insérés dans des cuves avec échangeurs à surface augmentée, tels que les tubes avec ailettes circulaires ou longitudinales pour maximiser le transfert thermique.

On connait notamment la technologie d'échangeur tube - calandre. Une calandre dans laquelle circule un fluide est parcourue par un faisceau de tubes dans lesquels un autre fluide s'écoule. Les deux fluides échangent de l'énergie par conduction à travers l'épaisseur des tubes. Dans le cas du stockage thermique cette technologie est adaptée, il n'y a plus échange entre deux fluides en mouvement, mais entre un fluide caloporteur qui circule dans les tubes et un MCP qui est fixe dans la calandre (mis à part les mouvements de convection naturelle en phase liquide). Lors de la charge, le fluide caloporteur arrive à une température supérieure à la température de fusion du MCP et cède de l'énergie à celui-ci, ce qui entraine sa fusion ; lors de la décharge, le fluide caloporteur entre à une température inférieure à la température de fusion du MCP et récupère l'énergie précédemment stockée, ce qui entraine la solidification du MCP.

Classiquement, la circulation du fluide dans le faisceau de tubes se fait de haut en bas pendant l'étape de charge, et inversement de bas en haut pendant l'étape de décharge. Les tubes possèdent donc une entrée et une sortie en position opposée et habituellement une en partie haute et une en partie basse. Le raccordement des tubes se fait en partie haute et en partie basse par exemple par une pieuvre hydraulique. Le raccordement des tubes à leurs extrémités est volumineux, générant un volume mort en haut et en bas de la cuve. De plus, l'assemblage de l'échangeur dans la cuve demande une manipulation assez complexe engendrant une perte de temps et des coûts de fabrication élevés.

On connait du document DE 40 06 965 un échangeur de chaleur à haute température comprenant un sel eutectique capable de stocker de la chaleur. Des tubes plongent dans l'enceinte contenant le sel eutectique. Les tubes sont traversés par un liquide ou un gaz par exemple de la vapeur à haute pression et à haute température.

Il existe donc le besoin d'optimiser les échangeurs thermiques de sorte à optimiser le stockage d'énergie thermique pour un dispositif donné.

### EXPOSE DE L'INVENTION

La présente invention propose à cet effet un dispositif de stockage d'énergie thermique par Matériau à Changement de Phase (MCP) suivant la revendication 1.

Selon l'invention, le fluide caloporteur est un fluide diphasique à état liquide et état gazeux destiné à circuler dans l'échangeur. La canalisation du distributeur et la canalisation du collecteur sont configurées pour déboucher en partie supérieure de l'échangeur.

Ainsi, l'introduction et l'évacuation du fluide caloporteur dans l'échangeur peuvent être réalisées par la partie supérieure de l'échangeur.

Par cette disposition de l'invention, les volumes morts générés par les raccordements des tubes de l'échangeur sont fortement réduits. Le montage de l'échangeur dans une cuve remplie de MCP est facilité en étant réalisé par un seul côté de l'échangeur.

En outre, la présence d'un fluide caloporteur diphasique liquide/gaz dans l'échangeur permet un stockage d'énergie thermique latent plus efficace qu'un simple stockage d'énergie sensible. La combinaison d'un fluide caloporteur diphasique avec une introduction et évacuation du fluide caloporteur en partie supérieure est particulièrement surprenante. Notamment, la gravité impose une séparation naturelle entre la phase liquide et la phase gazeuse du fluide caloporteur et le maintien de la phase liquide en partie supérieure et sa récupération est une démarche non évidente.

L'échangeur selon l'invention permet un agencement dans une cuve remplie de MCP d'un dispositif de stockage dont seule la partie supérieure et avantageusement la paroi supérieure est configurée pour permettre l'entrée et la sortie du fluide caloporteur de l'échangeur.

La fabrication des cuves et donc des dispositifs de stockage est nettement améliorée.

Suivant un autre aspect séparable, le dispositif selon l'invention comprend une pluralité d'échangeurs.

Avantageusement, le dispositif comprend des compensateurs de dilatation disposés entre les échangeurs et entre les échangeurs et la cuve, de sorte avantageusement d'une part d'assurer une étanchéité de la cuve et avantageusement d'autre part de compenser les dilatations différentes des échangeurs. L'échangeur selon l'invention permet que ce-dernier soit agencé en appui sur le fond de la cuve, sans nécessiter de raccordement dans cette zone.

Suivant un autre aspect, l'invention concerne un procédé de stockage d'énergie thermique comprenant une étape de charge et une étape de décharge. Pour chaque étape, le fluide caloporteur est introduit en partie supérieure de la cuve et est évacué en partie supérieure également.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les figures d'accompagnement suivantes dans lesquelles :
Figure 1 : vue en coupe longitudinale d'un échangeur selon l'invention rempli de fluide caloporteur diphasique liquide - gaz.
Figure 2 : vue du dessus d'un échangeur selon la figure 1.
Figure 3 : vue en coupe longitudinale d'un dispositif de stockage selon l'invention comprenant une pluralité d'échangeurs remplis de fluide caloporteur diphasique liquide-gaz plongeant dans la cuve contenant un MCP.
Figure 4 : vue en perspective d'un mode de réalisation d'un corps de distributeur et/ou d'un corps de collecteur sous la forme d'une plaque forée de forme hexagonale.
Figure 5 : vues du dessus schématisée de plusieurs exemples de cuve de dispositif selon l'invention comprenant plusieurs échangeurs respectivement a) 19 échangeurs, b) 31 échangeurs, c) 29 échangeurs.
Figure 6 : vue du dessus schématisée d'une cuve d'un dispositif selon l'invention comprenant 37 échangeurs.

### EXPOSE DETAILLE DE MODES DE REALISATION PARTICULIERS

Avant d'entamer une revue détaillée de modes de réalisation de l'invention, sont énoncées ci-après des caractéristiques optionnelles qui peuvent éventuellement être utilisées en association ou alternativement.

On rappelle tout d'abord que l'invention concerne un dispositif selon la revendication 1.

Avantageusement, suivant des variantes préférées mais non limitatives, l'invention est telle que :
- la canalisation 8 du collecteur 6 s'étend en direction du distributeur 5 et est apte à être plongée dans le MCP 13.
- les tubes 2 s'étendent longitudinalement entre le distributeur 5 et le collecteur 6.
- les tubes 2 sont droits et parallèles entre-eux.
- les tubes 2 s'étendent verticalement.
- le distributeur 5 comprend un corps 24 formé d'une plaque tubulaire forée au cœur coopérant avec la première extrémité 3 des tubes 2.
- le collecteur 6 comprend un corps 25 formé d'une plaque tubulaire forée au cœur coopérant avec la deuxième extrémité 4 des tubes 2.
- le corps 24 du distributeur 5 et le corps 25 du collecteur 6 sont de section hexagonale.
- la cuve 14 comprend une paroi inférieure 15, des parois latérales 16 et une paroi supérieure définissant un volume intérieur recevant le au moins un MCP 13.
- la canalisation 7 du distributeur 5 et la canalisation 8 du collecteur 6 traversent la paroi supérieure de la cuve 14 pour déboucher en dehors de la cuve 14.
- ledit échangeur 1 repose au contact de la paroi inférieure 15 de la cuve 14.
- le dispositif comprend des compensateurs de dilatations 20 configurés pour assurer une étanchéité entre le distributeur de l'échangeur 1 thermique et la cuve 14.
- le dispositif comprend plusieurs échangeurs 1 juxtaposés dans la cuve 14 et plusieurs compensateurs de dilatations 20 agencés respectivement entre les distributeurs 5 des échangeurs 1.
- le MCP 13 est un MCP solide-liquide.

Suivant un autre aspect, l'invention concerne un procédé de stockage d'énergie thermique dans un dispositif de l'invention comprenant une phase de charge au cours de laquelle :
- le fluide caloporteur pénètre dans l'échangeur 1 en partie supérieure par la canalisation 7 du distributeur 5 débouchant en partie supérieure 17 de la cuve 14,
- le distributeur 5 en partie supérieure de l'échangeur 1 distribue le fluide caloporteur à l'état gazeux à la pluralité de tubes 2,
- le fluide caloporteur à l'état gazeux se condense dans les tubes 2 entrainant la fusion du MCP 13,
- le fluide caloporteur sous forme liquide est collecté par le collecteur 6 en partie inférieure de l'échangeur 1 et est évacué de l'échangeur 1 par la canalisation 8 du collecteur 6 débouchant en partie supérieure 17 de la cuve 14.

Avantageusement, suivant des variantes préférées cumulables ou alternatives mais non limitatives, l'invention est telle que :
- le procédé comprend une phase de décharge au cours de laquelle :
- le fluide caloporteur pénètre dans l'échangeur 1 en partie supérieure 17 par la canalisation 8 du collecteur 6 débouchant en partie supérieure 17 de la cuve 14,
- le collecteur 6 en partie inférieure de l'échangeur 1 distribue le fluide caloporteur à l'état liquide à la pluralité de tubes 2,
- le fluide caloporteur à l'état liquide se vaporise dans les tubes 2 entrainant la solidification du MCP 13,
- le fluide caloporteur à l'état gazeux est collecté par le distributeur 5 en partie supérieure et est évacué de l'échangeur 1 par la canalisation 7 du distributeur 5 débouchant en partie supérieure 17 de la cuve 14.
- le fluide caloporteur est introduit dans l'échangeur 1 et est récupéré de l'échangeur 1 par la partie supérieure 17 de la cuve 14.
- le fluide caloporteur est à l'état liquide dans toute la canalisation 8 du collecteur 6.

L'invention porte sur un échangeur thermique 1 comprenant un fluide caloporteur. L'échangeur thermique 1 selon l'invention est destiné à être agencé dans une cuve 14 pour former un dispositif de stockage d'énergie thermique. La cuve comprend au moins un MCP 13 et l'échangeur 1 est avantageusement au moins partiellement plongé dans le MCP 13 contenu dans la cuve 14.

Le fluide caloporteur est préférentiellement un fluide diphasique c'est-à-dire qu'il est configuré pour prendre alternativement deux phases ou états dans les conditions de fonctionnement de l'invention. Selon l'invention, le fluide caloporteur est à l'état liquide et à l'état gazeux dans les conditions de fonctionnement, c'est-à-dire de température et de pression, de l'échangeur 1 et du dispositif de stockage d'énergie thermique de l'invention.

Le changement de phase ou d'état du fluide caloporteur se fait lors de la charge et de la décharge du dispositif de stockage d'énergie thermique au sein de l'échangeur 1 par transfert d'énergie thermique entre le fluide caloporteur et le MCP 13.

Avantageusement, en charge, le fluide caloporteur pénètre dans l'échangeur 1 sous forme gazeuse, le transfert d'énergie se fait au profit du MCP 13 grâce au fluide caloporteur qui cédé son énergie thermique. Le fluide caloporteur diminue alors en température et change d'état pour être à l'état liquide en sortie de l'échangeur 1. En décharge, le fluide caloporteur pénètre dans l'échangeur 1 sous forme liquide, le transfert d'énergie se fait au profit du fluide caloporteur grâce au MCP 13 qui cède son énergie thermique. Le fluide caloporteur augmente alors en température et change d'état pour être à l'état gazeux en sortie de l'échangeur 1.

Le stockage d'énergie latente permet d'absorber l'énergie de condensation de la vapeur du fluide caloporteur pendant la charge, et de restituer la chaleur latente pour évaporer le fluide caloporteur liquide pendant la décharge. Ce processus est avantageusement réalisé sans variation importante du niveau de température, ni avantageusement, de la qualité de l'énergie.

La cuve 14 contient au moins un MCP 13. Il peut être utilisé des mélanges de MCP 13. Dans la suite de la description, la référence à un 13 MCP n'est pas limitative. Différents MCP peuvent être utilisés notamment les MCP à transition solide/solide ou préférentiellement les MCP à transition solide/liquide. L'invention est adaptée à une vaste variété de MCP et donc à une large gamme de température de stockage. Les deux grandes catégories de MCP pouvant être utilisés sont les organiques (paraffine, acide gras, alcool,...) et les inorganiques (sels, hydrates de sel, alliages métalliques,...). Pour les réseaux de chaleur à eau surchauffée (-180°C) le MCP utilisé aura une température de fusion de l'ordre de 100-120°C, par exemple : de l'érythritol, de l'acide sébacique, une paraffine,... Il est préféré de cibler un matériau qui ne s'oxyde pas et qui n'oxyde pas la structure métallique de l'échangeur 1 ou de la cuve 14 et qui ait une bonne enthalpie massique de changement de phase et qui ne soit pas toxique. De préférence, le MCP 13 aura une bonne capacité calorifique et une conductivité thermique la plus élevée possible.

Le MCP 13 est un matériau à deux phases préférentiellement solide et liquide dont le passage entre ces deux phases stocke ou libère de l'énergie. Préférentiellement, le passage d'une première phase à une deuxième phase va nécessiter de la chaleur qui est donc stockée dans le MCP dans sa deuxième phase. A contrario, le passage de la deuxième phase à la première phase est exothermique et libère la chaleur stockée.

Lorsque le dispositif de stockage d'énergie fonctionne pour stocker de l'énergie thermique, c'est-à-dire en charge, l'échangeur 1 apporte de la chaleur dans la cuve 14, il y a un échange de chaleur du fluide caloporteur vers le MCP 13 au travers de l'échangeur. Cette chaleur va permettre la transformation du MCP 13 de la première phase à la deuxième phase qui stockera alors la chaleur issue du fluide caloporteur. Lorsque le dispositif fonctionne pour restituer de l'énergie thermique, c'est-à-dire en décharge, l'échangeur 1 refroidit le MCP 13, il y a un échange de chaleur du MCP 13 vers le fluide caloporteur au travers de l'échangeur 2, ce qui permet le passage de la deuxième phase à la première phase. Cette transformation est exothermique. La chaleur libérée est récupérée par le fluide caloporteur.

L'échangeur 1 comprend une pluralité de tubes 2. Avantageusement, le fluide caloporteur circule dans l'échangeur 1 et plus particulièrement dans les tubes 2. C'est au sein des tubes 2 de l'échangeur 1 qu'à lieu le changement de phase du fluide caloporteur.

L'échangeur 1 selon l'invention est destiné à être au moins partiellement immergé dans une cuve 14 contenant au moins un MCP 13.

Les tubes 2 comprennent une première extrémité 3 et une deuxième extrémité 4. Avantageusement, la première extrémité 3 est apte à être agencée en partie supérieur de l'échangeur 1 tandis que la deuxième extrémité 4 est apte à être agencée en partie inférieure de l'échangeur 1. Cette disposition se retrouve ainsi lorsque l'échangeur 1 est agencé dans la cuve 14 du dispositif, c'est-à-dire que la première extrémité 3 des tubes 2 est disposée en partie supérieure 17 de la cuve 14 et la deuxième extrémité 4 des tubes 2 est disposée en partie inférieure 18 de la cuve 14.

On entend par partie supérieure, la zone située au-dessus, suivant un axe vertical, d'un plan médian horizontal. La partie supérieure est préférentiellement le tiers supérieur respectivement de la cuve 14 ou de l'échangeur 1.

On entend par partie inférieure, la zone située au-dessous, suivant un axe vertical, d'un plan médian horizontal. La partie inférieure est préférentiellement le tiers inférieur respectivement de la cuve 14 ou de l'échangeur 1.

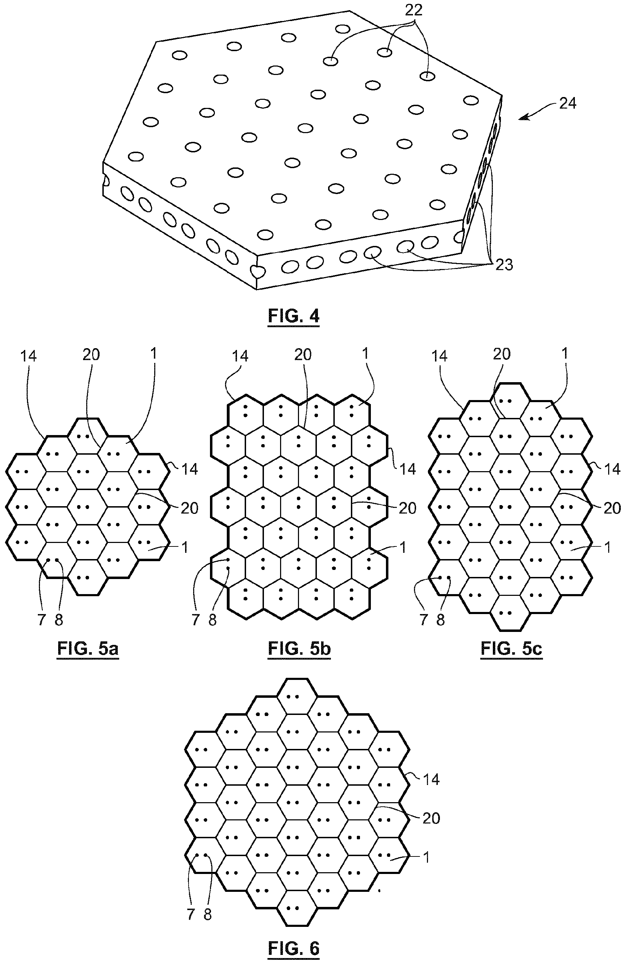

L'échangeur 1 comprend un distributeur 5 mettant en communication fluidique les premières extrémités 3 des tubes 2 et un collecteur 6 mettant en communication fluidique les deuxièmes extrémités 4 des tubes 2. L'ensemble des premières extrémités 3 des tubes 2 sont débouchantes dans le distributeur 5. L'ensemble des deuxièmes extrémités 3 des tubes 2 sont débouchantes dans le collecteur 6. Les tubes 2 sont débouchants en partie supérieure au niveau du distributeur et en partie inférieure au niveau du collecteur. C'est-à-dire que la première extrémité d'un tube est ouverte et est située en partie supérieure de l'échangeur. Cette première extrémité est en communication fluidique avec le distributeur 5. C'est-à-dire que la deuxième extrémité d'un tube est ouverte et est située en partie inférieure de l'échangeur. Cette deuxième extrémité est en communication fluidique avec le collecteur 6. Le distributeur 5 et le collecteur 6 ont un rôle fonctionnel de formation du réseau fluidique pour la circulation du fluide caloporteur dans l'échangeur 1. Avantageusement, le distributeur 5 et le collecteur 6 ont un rôle mécanique de maintien et liaison mécanique de la pluralité de tubes 2 à chacune des deux extrémités 3, 4 des tubes 2. A titre préférée, le distributeur 5 et le collecteur 6 comprennent chacun un corps 24, 25 formé par exemple par une plaque tel qu'illustrée à la figure 4. Cette plaque est forée à cœur pour permettre la distribution et la collecte du fluide caloporteur aux extrémités des différents tubes 2. La plaque comprend des conduits de circulation de fluide formés longitudinalement dans l'épaisseur de ladite plaque. L'utilisation de cette plaque contribue à réduire les volumes morts et à faciliter les connexions des tubes.

Le distributeur 5 est agencé en partie supérieure de l'échangeur et le collecteur 6 est agencé en partie inférieure de l'échangeur.

Le distributeur 5 et le collecteur 6 assure une répartition avantageusement uniforme du fluide caloporteur aux tubes 2.

Le corps 24, 25 comprend une pluralité de passage 22 formés transversalement dans l'épaisseur du corps 24, 25 dans lesquels sont insérées et soudées les extrémités 3, 4 des tubes 2. Le corps 24, 25 comprend également des ouvertures 23 correspondant aux embouchures de conduits de circulation de fluide formés longitudinalement dans l'épaisseur du corps.

Avantageusement, les tubes 2 sont solidaires du corps 24 du distributeur 5 et du corps 25 du collecteur 6 respectivement par leurs premières extrémités 3 et par leurs deuxièmes extrémités 4 qui sont par exemple soudées aux corps 24, 25.

Le distributeur 5 comprend une canalisation 7 destinée à l'introduction ou à la sortie du fluide caloporteur de l'échangeur 1, plus précisément des tubes 2.

Le collecteur 6 comprend une canalisation 8 destinée à l'introduction ou à la sortie du fluide caloporteur de l'échangeur 1, plus précisément des tubes 2.

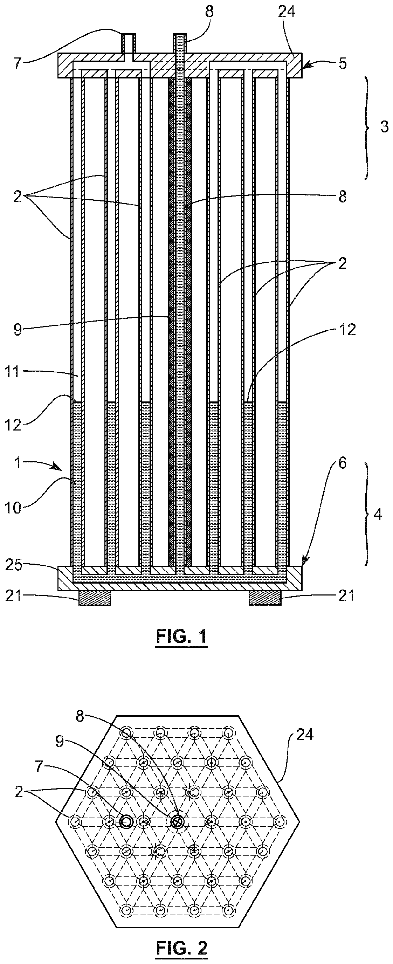

Comme illustré aux figures 1 à 3, le distributeur 5, plus précisément le corps 24 de distributeur présente deux faces : une face supérieure et une face inférieure. Les tubes 2 sont solidaires du distributeur 5 au niveau de sa face inférieure. Avantageusement, la canalisation 7 est solidaire du distributeur 5 au niveau de sa face supérieure. La canalisation 7 du distributeur 5 est agencée de manière opposée aux tubes 2 relativement au corps 24 de distributeur 5.

Selon l'invention, la canalisation 8 du collecteur 6 s'étend en direction du distributeur 5. Comme illustré aux figures 1 à 3, le collecteur 6, plus précisément le corps 25 de collecteur 6 présente deux faces : une face supérieure et une face inférieure. Les tubes 2 sont solidaires du collecteur 6 au niveau de sa face supérieur. La canalisation 8 est solidaire du collecteur 6 au niveau de sa face supérieure. La canalisation 8 du collecteur 6 est agencée du même côté que les tubes 2 relativement au corps 25 de collecteur 6.

Les tubes 2 peuvent être de n'importe quelle section, avec une préférence marquée pour les tubes 3 à section circulaire qui sont les plus simples à concevoir et qui résistent le mieux à la pression. La disposition des tubes 2 peut également varier, ils peuvent être en carré, en triangle,...

Les tubes 2 peuvent être en acier, les nuances classiques pour une paroi sous pression sont P235GH, P265GH, P355GH ; en l'absence de pression, les aciers inoxydables 304, 316 peuvent être utilisés, en aluminium, en cuivre, ou en autre métal ou alliage. Avec une préférence pour l'acier ayant un faible coût, qui est solide et résistant à la pression et l'aluminium, facile à travailler, bon conducteur thermique.

Classiquement, les tubes 2 sont entourés d'ailettes circulaires augmentant la surface d'échange thermique ou bien d'inserts de plus grandes dimensions permettant en plus de maintenir les tubes solidaires entre eux.

Les canalisations 7 et 8 peuvent être formées comme les tubes 2 hormis la présence d'ailettes ou d'inserts.

Avantageusement, la canalisation 7 du distributeur 5 et la canalisation 8 du collecteur 6 sont configurées pour déboucher en partie supérieure de l'échangeur 1. La canalisation 8 débouche au-delà de la face supérieure du distributeur 5. La canalisation 8 traverse le distributeur 5 sans être en communication fluidique avec celui-ci.

Les tubes 2 s'étendent avantageusement verticalement. Les tubes 2 s'étendent longitudinalement entre le collecteur 6 et le distributeur 5, préférentiellement les tubes 2 sont droits et parallèles les uns aux autres.

La canalisation 8 du collecteur 6 est avantageusement parallèle aux tubes 2. La canalisation 8 s'étend sur tour la hauteur de l'échangeur 1.

Préférentiellement, les canalisations 7, 8 débouchent sur la face supérieure de l'échangeur 1. On entend par face supérieure, la surface de l'échangeur 1 située au-dessus de la première extrémité des tubes 2. La face supérieure de l'échangeur 1 correspond préférentiellement à la face supérieure du corps 24 du distributeur 5.

L'échangeur 1 étant agencé dans une cuve 14, les canalisations 7, 8 débouchent en partie supérieure de la cuve 14. Préférentiellement au niveau de la face supérieure de la cuve 14.

Les raccordements de l'échangeur 1 sont donc réalisées par le haut ce qui facilite l'assemblage de l'échangeur 1 dans la cuve 14 ainsi que son extraction pour réparation ou remplacement.

La cuve 14 comprend avantageusement une paroi inférieure 15 dénommée également fond, des parois latérales 16 et face supérieure. La face supérieure est opposée au fond 15.

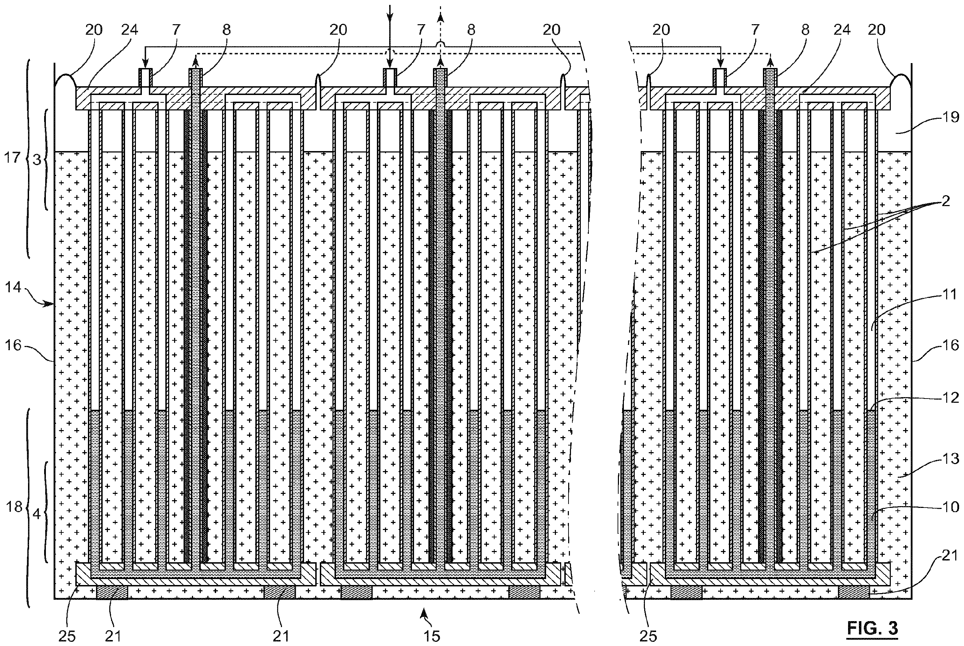

Selon cette disposition avantageuse, l'échangeur 1 est agencé directement sur le fond 15 de la cuve 14. Avantageusement, l'échangeur 1 repose sur le fond 15 de la cuve 14 par exemple par des pieds 21, comme illustré en figure 3.

Comme indiqué ci-dessus, l'échangeur 1 est au moins partiellement immergé dans le MCP 13. Les tubes 2 plongent avantageusement au contact du MCP 13 pour permettre les échanges thermiques. La canalisation 8 est également avantageusement plongée au moins partiellement dans le MCP 13.

De manière caractéristique de l'invention, la canalisation 8 du collecteur 6 est isolée thermiquement de sorte à limiter les échanges thermiques entre la canalisation 8 du collecteur 6 et le MCP 13. La conductivité thermique de la canalisation 8 est avantageusement de 0.02 à 0.1 W/m/K. A titre d'exemple, la canalisation 8 est entourée d'au moins une couche de matériau isolant thermiquement 9 tel que le silicate de calcium par exemple.

Cette disposition permet que le fluide caloporteur circulant dans cette canalisation 8 de collecteur 6 ne subisse pas de changement de phase.

Le fluide caloporteur est à l'état liquide dans le collecteur 6 et notamment sur toute la longueur de la canalisation 8.

L'échangeur 1 est par exemple une unité hexagonale. La forme de l'échangeur 1 est notamment défini par la forme du distributeur 5 et du collecteur 6, plus précisément des corps 24, 25 de distributeur 5 et de collecteur 6. Tel qu'illustré en figure 4, le corps 24 de distributeur 5 présente une section hexagonale qui s'entend dans un plan perpendiculaire à l'axe longitudinal des tubes 2. Cette forme permet une disposition des tubes 2 optimisée en minimisant les zones inactives. L'échangeur 1 est avantageusement configuré pour résister à des hautes pressions par exemple de 20 à 150 bars.

Le type de plaque illustré à la figure 4 présente notamment comme avantages la minimisation du volume mort de fluide caloporteur, un accès facile aux soudures des tubes 2 pour inspections réglementaires et éventuelles opération d'étanchage ou bouchonnage des tubes, une bonne tenue en fatigue aux cyclages de température et pression et des possibilités d'automatisation de la fabrication permettant des économies d'échelle.

Selon un mode de réalisation préféré, la cuve 14 comprend des parois intérieures classiquement métalliques. Selon une possibilité, les parois sont préférentiellement recouvertes d'un matériau de revêtement destiné à éviter le contact entre le au moins un MCP 13 et des parties métalliques. A titre d'exemple le matériau de revêtement est un polymère ou une résine, préférentiellement un matériau de type résine fluorée tel du PTFE, FEP ou PFA. Cette disposition améliore les capacités de stockage du MCP en limitant l'oxydation du MCP lors des cycles de stockage au contact de l'oxygène et/ou du métal. Avantageusement, cette disposition peut également être utile pour éviter la corrosion de la cuve par le MCP si celui-ci est corrosif.

Plusieurs échangeurs 1 peuvent être placés dans une cuve 14, avantageusement basse pression contenant au moins un MCP 13. Avantageusement, des compensateurs de dilatation 20 sont agencés entre les différents distributeurs 5. Selon une possibilité, le dispositif comprend des compensateurs de dilatation 20 avantageusement placés entre les distributeurs 6 des échangeurs 1 et la cuve 14, si une étanchéité est nécessaire à cet endroit. Les compensateurs de dilatation 20 permettent avantageusement des dilatations thermiques différentielles entre les distributeurs 5 et la cuve 14. Selon une possibilité avantageuse, les compensateurs de dilatations 20 permettent également de garantir l'étanchéité du ciel gazeux de la cuve 14.

Les compensateurs de dilatation 20 sont des joints avantageusement étanches et préférentiellement présentant une élasticité permettant d'absorber les dilatations thermiques entre les échangeurs 1.

Suivant cette disposition illustrée en figure 3, les distributeurs 5 des échangeurs 1 forment la face supérieure de la cuve 14.

La partie supérieure 17 de la cuve 14, avantageusement au-dessus du MCP 13 peut être avantageusement occupée par un ciel gazeux 19 comprenant un gaz inerte permettant de limiter les processus de corrosion.

En figure 3, illustrant un dispositif selon l'invention avec une cuve 14 dans laquelle sont placés des échangeurs 1, dont 3 sont entièrement représentés, et un MCP 13, les flèches indiquent le sens d'écoulement du fluide caloporteur pendant la phase de charge (condensation du fluide caloporteur, fusion du MCP). Les flèches à trait continu correspondent au fluide caloporteur à l'état vapeur tandis que les flèches à trait discontinu correspondent au fluide caloporteur à l'état liquide. Le sens d'écoulement est inversé en phase de décharge (évaporation du fluide caloporteur, solidification du MCP).

Pendant l'étape de charge, le fluide caloporteur sous forme gazeuse pénètre dans l'échangeur 1 par le distributeur 5 agencé en partie supérieure 17 de la cuve 14. Le fluide caloporteur pénètre par la face supérieure du corps 24 du distributeur 5 grâce à la canalisation 7. Le distributeur distribue de manière homogène le fluide caloporteur dans les tubes 2, où il se condense en entraînant la fusion du MCP 13. Le fluide caloporteur à l'état liquide est recueilli en partie inférieure 18 de la cuve 14 par le collecteur 6. Le fluide caloporteur pour sortir de la cuve traverse le collecteur 6 et remonte dans la canalisation 8 du collecteur 6 avant d'être extrait de la cuve 14.

Inversement, l'étape de décharge, le fluide caloporteur sous forme liquide pénètre dans l'échangeur 1 par le collecteur 6 agencé en partie inférieure 18 de la cuve 14. Le fluide caloporteur pénètre par la face supérieure du corps 25 du collecteur grâce à la canalisation 8 débouchant en partie supérieure 17 de la cuve 14. Le collecteur 6 distribue de manière homogène le fluide caloporteur dans les tubes 2, où il la solidification du MCP 13 permet la vaporisation du fluide caloporteur. Le fluide caloporteur à l'état gazeux est recueilli en partie supérieure 17 de la cuve 14 par le distributeur 5. Le fluide caloporteur pour sortir de la cuve traverse le distributeur 5 et remonte dans la canalisation 7 du distributeur 5 avant d'être extrait de la cuve 14.

Avantageusement, tel qu'illustré par exemple en figure 3, l'échangeur 1 comprend un niveau de liquide 12 dans les tubes 2 variable selon l'étape de charge ou de décharge mais se situant toujours au-dessus du collecteur 6. Le niveau de liquide 12 illustre la séparation des deux phases du fluide caloporteur, la phase gazeuse, la vapeur 11 étant au-dessus de la phase liquide 10. Ainsi, le fluide caloporteur est toujours à l'état liquide dans le collecteur 6 et donc dans la canalisation 8 et toujours à l'état gazeux dans le distributeur 5.

Dans une cuve 14 comprenant plusieurs échangeurs 1, l'agencement des échangeurs 1 peut se faire selon un schéma hexagonal pour minimiser la surface de la cuve 14 et pour un nombre d'échangeurs 1 optimisé en fonction de la capacité de stockage requise. Les échangeurs 1 sont juxtaposés dans la cuve 14. La forme extérieure de la cuve 14 peut prendre plusieurs aspects différents, comme par exemple ceux représentés sur la Figure 5 illustrant a) un dispositif avec une cuve 14 de forme hexagonale régulière avec 19 échangeurs 1, b) un dispositif avec une cuve 14 de forme rectangulaire avec 31 échangeurs 1, c) un dispositif avec une cuve 14 de forme hexagonale allongée avec 29 échangeurs 1.

En figures 5 et 6, la cuve 14 est vue du dessus avec les échangeurs 1 chacun comprenant une canalisation 7 et une canalisation 8, chaque échangeur étant joint à l'échangeur juxtaposé par au moins un compensateur de dilatation 20.

L'avantage de placer plusieurs échangeurs 1 dans une même cuve 14 est notamment de réduire les coûts de la cuve 14. Mais également, le fait d'avoir un seul volume de MCP 13, en effet, pour ses applications hautes températures le remplissage en MCP 13 de la cuve 14 est une opération couteuse et complexe, puisque le MCP 13 doit être introduit sous forme liquide donc fondu. L'utilisation d'une seule cuve 14 permet d'effectuer cette opération en une seule fois. L'isolation thermique globale du dispositif est améliorée du fait de la réduction de la surface à calorifuger.

Le dispositif permettra de stocker de l'énergie thermique d'un fluide caloporteur sur des plages de température pouvant être comprises entre 100 et 1000°C, durant une période journalière, et de restituer cette énergie au même niveau de température directement dans le même fluide caloporteur.

Le procédé de stockage et déstockage d'énergie thermique dans un dispositif tel que décrit ci-dessus, également dénommé procédé de charge et de décharge d'énergie thermique comprend une étape de charge et une étape de décharge. Avantageusement, dans l'étape de charge et dans l'étape de décharge, l'entrée et la sortie du fluide caloporteur dans l'échangeur se fait en partie supérieure dudit échangeur 1.

### Exemple :

Une centrale d'énergie solaire thermodynamique fonctionne à une pression nominale de 110 bars. Pour pouvoir restituer la quantité de vapeur correspondant à 6 heures de fonctionnement à pleine charge, le stockage doit avoir une capacité de 900 MWht. Aux niveaux de températures et pressions visés par cette application, le stockage par MCP correspond à près de 50% de la capacité de stockage totale, et le NaNO3 est un MCP intéressant. Dans ces conditions le volume total de NaNO3 nécessaire pour la centrale serait d'environ 4400 m3.

Or, un dispositif de stockage de taille optimisée, comprenant 217 tubes de 9 m de long par exemple nécessiterait un volume de NaNO3 de 60 m3 par échangeur. Il faut donc 74 échangeurs 1 pour atteindre la capacité de stockage requise par la centrale solaire.

**Tableau : Caractéristiques du stockage MCP pour une centrale à génération directe de vapeur (sans utilisation d'un fluide caloporteur intermédiaire) de 50 MWe**

| | | |
|---|---|---|
| Puissance électrique nominale | **MWe** | **50** |
| Puissance thermique nominale | **MWt** | **150** |
| Capacité de stockage | **h** | **6** |
| Capacité totale du stockage | **MWht** | **900** |
| Capacité du stockage par MCP | **MWht** | **444** |
| Chaleur latente MCP (NaN03) | **kJ/kg** | **172** |
| Masse totale de MCP | **t** | **9300** |
| Volume total de MCP | **m3** | **4407** |
| Volume de MCP par échangeur | **m3** | **60** |
| Nombre échangeur | - | **73,5** |

Ces 74 échangeurs pourraient idéalement se répartir dans 2 cuves de 37 échangeurs, comme représenté dans la figure 6, ce qui permettrait d'optimiser la forme hexagonale de la cuve 14.

### REFERENCES

1. Echangeur
2. Tube
3. Première extrémité
4. Deuxième extrémité
5. Distributeur
6. Collecteur
7. Canalisation
8. Canalisation
9. Isolation thermique
10. Liquide
11. Vapeur
12. Niveau du liquide
13. MCP
14. Cuve
15. Paroi inférieure
16. Parois latérales
17. Partie supérieure
18. Partie inférieure
19. Ciel gazeux
20. Compensateur de dilatation
21. Pied
22. Passage
23. Ouverture
24. Corps du distributeur
25. Corps du collecteur

## Revendications

1. Dispositif de stockage d'énergie thermique par Matériau à Changement de Phase (MCP) comprenant au moins un MCP (13) et une cuve (14) destinée à contenir le au moins un MCP (13), et au moins un échangeur (1) thermique comprenant un fluide caloporteur, et plongeant au moins partiellement dans la cuve (14) contenant le matériau à changement de phase (MCP) (13), comprenant :
∘ une pluralité de tubes (2), chaque tube (2) comprenant une première extrémité (3) agencée en partie supérieure de l'échangeur (1) et une deuxième extrémité (4) agencée en partie inférieure de l'échangeur (1),
∘ un distributeur (5) agencé en partie supérieure de l'échangeur (1) et mettant en communication fluidique les premières extrémités (3),
∘ un collecteur (6) agencé en partie inférieure de l'échangeur (1) et mettant en communication fluidique les deuxièmes extrémités (4),
∘ le distributeur (5) comprenant une canalisation (7) débouchant destinée à l'introduction ou à l'évacuation du fluide caloporteur dans l'échangeur (1),
∘ le collecteur (6) comprenant une canalisation (8) débouchant destinée à l'introduction ou à l'évacuation du fluide caloporteur dans l'échangeur (1) et étant apte à être plongée dans le MCP (13),
le fluide caloporteur étant diphasique avec un état liquide et un état gazeux et destiné à circuler dans l'échangeur (1), et que la canalisation (8) du collecteur (6) et la canalisation (7) du distributeur (5) sont débouchant en partie supérieure de l'échangeur (1), **caractérisé en ce que** la canalisation (8) du collecteur (6) est isolée thermiquement et s'étend en direction du distributeur (5).

2. Dispositif selon la revendication précédente dans lequel le distributeur (5) comprend un corps (24) formé d'une plaque tubulaire forée au cœur coopérant avec la première extrémité (3) des tubes (2).

3. Dispositif selon l'une quelconque des revendications précédentes dans lequel le collecteur (6) comprend un corps (25) formé d'une plaque tubulaire forée au cœur coopérant avec la deuxième extrémité (4) des tubes (2).

4. Dispositif selon l'une quelconque des deux revendications précédentes dans lequel le corps (24) du distributeur (5) et le corps (25) du collecteur (6) sont de section hexagonale.

5. Dispositif selon l'une quelconque des revendications précédentes dans lequel la cuve (14) comprend une paroi inférieure (15), des parois latérales (16) et une paroi supérieure définissant un volume intérieur recevant le au moins un MCP (13).

6. Dispositif selon l'une quelconque des revendications précédentes dans lequel le MCP (13) est un MCP solide-liquide.

7. Procédé de stockage d'énergie thermique dans un dispositif selon l'une quelconque des revendications précédentes comprenant une phase de charge au cours de laquelle :
- le fluide caloporteur pénètre dans l'échangeur (1) en partie supérieure par la canalisation (7) du distributeur (5) débouchant en partie supérieure (17) de la cuve (14),
- le distributeur (5) en partie supérieure de l'échangeur (1) distribue le fluide caloporteur à l'état gazeux à la pluralité de tubes (2),
- le fluide caloporteur à l'état gazeux se condense dans les tubes (2) entrainant la fusion du MCP (13),
- le fluide caloporteur sous forme liquide est collecté par le collecteur (6) en partie inférieure de l'échangeur (1) et est évacué de l'échangeur (1) par la canalisation (8) du collecteur (6) débouchant en partie supérieure (17) de la cuve (14).

8. Procédé selon la revendication précédente comprenant une phase de décharge au cours de laquelle :
- le fluide caloporteur pénètre dans l'échangeur (1) en partie supérieure (17) par la canalisation (8) du collecteur (6) débouchant en partie supérieure (17) de la cuve (14),
- le collecteur (6) en partie inférieure de l'échangeur (1) distribue le fluide caloporteur à l'état liquide à la pluralité de tubes (2),
- le fluide caloporteur à l'état liquide se vaporise dans les tubes (2) entrainant la solidification du MCP (13),
- le fluide caloporteur à l'état gazeux est collecté par le distributeur (5) en partie supérieure et est évacué de l'échangeur (1) par la canalisation (7) du distributeur (5) débouchant en partie supérieure (17) de la cuve (14).

9. Procédé selon l'une quelconque des deux revendications précédentes dans lequel le fluide caloporteur est introduit dans l'échangeur (1) et est récupéré de l'échangeur (1) par la partie supérieure (17) de la cuve (14).

10. Procédé selon l'une quelconque des trois revendications précédentes dans lequel le fluide caloporteur est à l'état liquide dans toute la canalisation (8) du collecteur (6).

## Patentansprüche

1. Vorrichtung zur Speicherung von Wärmeenergie durch ein Phasenwechselmaterial (PCM), umfassend mindestens ein PCM (13) und einen Tank (14), der dazu vorgesehen ist, das mindestens eine PCM (13) zu enthalten, und mindestens einen Wärmetauscher (1), umfassend ein Wärmetransferfluid und zumindest partiell eintauchend in den Tank (14), der das Phasenwechselmaterial (PCM) (13) enthält, umfassend:
o mehrere Rohre (2), wobei jedes Rohr (2) ein erstes Ende (3), das in einem oberen Teil des Tauschers (1) eingerichtet ist, und ein zweites Ende (4), das in einem unteren Teil des Tauschers (1) eingerichtet ist, umfasst,
o einen Verteiler (5), der in einem oberen Teil des Tauschers (1) eingerichtet ist und eine Fluidverbindung der ersten Enden (3) herstellt,
o einen Sammler (6), der in einem unteren Teil des Tauschers (1) eingerichtet ist und eine Fluidverbindung der zweiten Enden (4) herstellt,
o wobei der Verteiler (5) eine geöffnete Rohrleitung (7) umfasst, die zum Einbringen oder Ablassen des Wärmetauscherfluids in den Tauscher (1) vorgesehen ist,
o wobei der Sammler (6) eine geöffnete Rohrleitung (8) umfasst, die zum Einbringen oder Ablassen des Wärmetauscherfluids in den Tauscher (1) vorgesehen ist und dazu geeignet ist, in das PCM (13) eingetaucht zu werden,
wobei das Wärmetransferfluid zweiphasig mit einem flüssigen Zustand und einem gasförmigen Zustand ist und dazu vorgesehen ist, in dem Tauscher (1) zu zirkulieren, und dass die Rohrleitung (8) des Sammlers (6) und die Rohrleitung (7) des Verteilers (5) sich in einen oberen Teil des Tauschers (1) öffnen, **dadurch gekennzeichnet, dass** die Rohrleitung (8) des Sammlers (6) wärmeisoliert ist und sich in der Richtung des Verteilers (5) erstreckt.

2. Vorrichtung nach dem vorhergehenden Anspruch, wobei der Verteiler (5) einen Körper (24) umfasst, der von einer kerngebohrten rohrförmigen Platte gebildet wird, die mit dem ersten Ende (3) der Rohre (2) zusammenwirkt.

3. Vorrichtung nach einem der vorhergehenden Ansprüche, wobei der Sammler (6) einen Körper (25) umfasst, der von einer kerngebohrten rohrförmigen Platte gebildet wird, die mit dem zweiten Ende (4) der Rohre (2) zusammenwirkt.

4. Vorrichtung nach einem der zwei vorhergehenden Ansprüche, wobei der Körper (24) des Verteilers (5) und der Körper (25) des Sammlers (6) einen hexagonalen Querschnitt aufweisen.

5. Vorrichtung nach einem der vorhergehenden Ansprüche, wobei der Tank (14) eine untere Wand (15), seitliche Wände (16) und eine obere Wand umfasst, die ein Innenvolumen definieren, das das mindestens eine PCM (13) aufnimmt.

6. Vorrichtung nach einem der vorhergehenden Ansprüche, wobei das PCM (13) ein fest-flüssiges PCM ist.

7. Verfahren zur Speicherung von Wärmeenergie in einer Vorrichtung nach einem der vorhergehenden Ansprüche, umfassend eine Ladungsphase, während der:
- das Wärmetransferfluid in den Tauscher (1) in einem oberen Teil durch die Rohrleitung (7) des Verteilers (5), die sich in einen oberen Teil (17) des Tanks (14) öffnet, eindringt,
- der Verteiler (5) in einem oberen Teil des Tauschers (1) das Wärmetransferfluid im gasförmigen Zustand an die mehreren Rohre (2) verteilt,
- das Wärmetransferfluid im gasförmigen Zustand in den Rohren (2) kondensiert, was das Verschmelzen des PCM (13) verursacht,
- das Wärmetransferfluid in flüssiger Form von dem Sammler (6) in einem unteren Teil des Tauschers (1) gesammelt wird und aus dem Tauscher (1) durch die Rohrleitung (8) des Sammlers (6), die sich in einen oberen Teil (17) des Tanks (14) öffnet, abgelassen wird.

8. Verfahren nach dem vorhergehenden Anspruch, umfassend eine Entladungsphase, während der:
- das Wärmetransferfluid in den Tauscher (1) in einem oberen Teil (17) durch die Rohrleitung (8) des Sammlers (6), die sich in einen oberen Teil (17) des Tanks (14) öffnet, eindringt,
- der Sammler (6) in einem unteren Teil des Tauschers (1) das Wärmetransferfluid im flüssigen Zustand an die mehreren Rohre (2) verteilt,
- das Wärmetransferfluid im flüssigen Zustand in den Rohren (2) verdampft, was das Verfestigen des PCM (13) verursacht,
- das Wärmetransferfluid im gasförmigen Zustand von dem Verteiler (5) in einem oberen Teil gesammelt wird und aus dem Tauscher (1) durch die Rohrleitung (7) des Verteilers (5), die sich in einen oberen Teil (17) des Tanks (14) öffnet, abgelassen wird.

9. Verfahren nach einem der zwei vorhergehenden Ansprüche, wobei das Wärmetransferfluid in den Tauscher (1) eingebracht wird und aus dem Tauscher (1) durch den oberen Teil (17) des Tanks (14) wiedergewonnen wird.

10. Verfahren nach einem der drei vorhergehenden Ansprüche, wobei das Wärmetransferfluid in der gesamten Rohrleitung (8) des Sammlers (6) im flüssigen Zustand ist.

## Claims

1. Thermal energy storage device using a phase change material (PCM) comprising at least one PCM (13) and a tank (14) intended to contain the at least one PCM (13), and at least one heat exchanger (1) comprising a heat transfer fluid, and at least partially immersed in the tank (14) containing the phase change material (PCM) (13), comprising:
o a plurality of tubes (2), each tube (2) comprising a first end (3) arranged in the upper part of the heat exchanger (1) and a second end (4) arranged in the lower part of the heat exchanger (1),
o a distributor (5) arranged in the upper part of the heat exchanger (1) and establishing fluid communication between the first ends (3),
o a manifold (6) arranged in the lower part of the heat exchanger (1) and establishing fluid communication between the second ends (4),
o the distributor (5) comprising an open pipe (7) for supplying or discharging the heat transfer fluid to/from the heat exchanger (1),
∘ the manifold (6) comprising an open pipe (8) for supplying or discharging the heat transfer fluid to/from the heat exchanger (1) and being capable of being immersed in the PCM (13),
the heat transfer fluid being a two-phase fluid with a liquid state and a gaseous state and intended to flow within the heat exchanger (1), and in that the pipe (8) of the manifold (6) and the pipe (7) of the distributor (5) open out into the upper part of the heat exchanger (1), **characterised in that** the pipe (8) of the manifold (6) is thermally insulated and extends towards the distributor (5).

2. Device according to the preceding claim, wherein the distributor (5) comprises a body (24) formed by a tube plate drilled through the core and cooperating with the first end (3) of the tubes (2).

3. Device according to any one of the preceding claims, wherein the manifold (6) comprises a body (25) formed by a tube plate drilled through the core and cooperating with the second end (4) of the tubes (2).

4. Device according to any one of the preceding two claims, wherein the body (24) of the distributor (5) and the body (25) of the manifold (6) have a hexagonal cross-section.

5. Device according to any one of the preceding claims, wherein the tank (14) comprises a bottom wall (15), side walls (16) and a top wall defining an interior volume accommodating the at least one PCM (13).

6. Device according to any one of the preceding claims, wherein the PCM (13) is a solid-liquid PCM.

7. Method for storing thermal energy in a device according to any one of the preceding claims comprising a charging phase during which:
- the heat transfer fluid enters the heat exchanger (1) at the upper part via the pipe (7) of the distributor (5) which opens out into the upper part (17) of the tank (14),
- the distributor (5) in the upper part of the heat exchanger (1) distributes the heat transfer fluid in the gaseous state to the plurality of tubes (2),
- the heat transfer fluid in the gaseous state condenses inside the tubes (2) causing the PCM (13) to melt,
- the heat transfer fluid in liquid form is collected by the manifold (6) in the lower part of the heat exchanger (1) and is discharged from the heat exchanger (1) via the pipe (8) of the manifold (6) opening out into the upper part (17) of the tank (14).

8. Method according to the preceding claim comprising a discharging phase during which:
- the heat transfer fluid enters the heat exchanger (1) at the upper part (17) via the pipe (8) of the manifold (6) which opens out into the upper part (17) of the tank (14),
- the manifold (6) in the lower part of the heat exchanger (1) distributes the heat transfer fluid in the liquid state to the plurality of tubes (2),
- the heat transfer fluid in the liquid state evaporates inside the tubes (2) causing the PCM (13) to solidify,
- the heat transfer fluid in the gaseous state is collected by the distributor (5) in the upper part and is discharged from the heat exchanger (1) via the pipe (7) of the distributor (5) opening out into the upper part (17) of the tank (14).

9. Method according to any one of the preceding two claims, wherein the heat transfer fluid is supplied to the heat exchanger (1) and is recovered from the heat exchanger (1) via the upper part (17) of the tank (14).

10. Method according to any one of the preceding three claims, wherein the heat transfer fluid is in the liquid state throughout the pipe (8) of the manifold (6).
